# EUROPEAN PATENT SPECIFICATION

(11) **EP 1 347 829 B1**
(45) Date of publication and mention of the grant of the patent: **08.10.2008**
(21) Application number: 02710520.4
(22) Date of filing: 02.01.2002
(51) Int. Cl.: B01J 19/00

(54) **MULTIPLE VESSEL ARRAY**
ARRAY FÜR MEHRERE BEHÄLTER
SERIE DE CUVES MULTIPLES

(30) Priority: 03.01.2001 GB 0100096
(43) Date of publication of application: 01.10.2003
(73) Proprietor: Avantium International B.V., 1014 BV Amsterdam (NL)
(72) Inventor: VAN DEN BRINK, Peter, John, NL-3972 EJ Driebergen (NL); VAN DER WAAL, Jan, Cornelis, NL-2517 VG Den Haag (NL); VAN LANGEN, Simon, Adrianus, Joseph, NL-1702 AE Heerhugowaard (NL); NAGY, Anton, John, NL-1016 VX Amsterdam (NL); HARJI, Bashir, Husein, Cottenham CB4 8XJ (GB)
(74) Representative: Brookhuis, Hendrik Jan Arnold
(86) International application number: PCT/NL2002/000002
(87) International publication number: WO 2002/053278

(56) References cited:
- EP-A- 0 916 397
- EP-A- 1 108 467
- WO-A-00/09255
- US-A- 6 132 686

## Description

The present invention relates to a reactor vessel array in which a number of different physical and/or chemical operations can be performed, either simultaneously or sequentially. In particular, the present invention relates to an array of reactor vessels which are flanged and which have sealing means associated with the flange to facilitate sealing of all the vessels in the array in a single operation.

The desirability of performing a multiplicity of operations in a short time is well known to persons skilled in the art and a number of systems have been proposed with the aim of decreasing the time required for carrying out physical and/or chemical operations, including the time taken to deliver reaction products or effluent to an analyser. Some of the proposed systems also reduce the size or scale at which these operations are performed. Some such systems are commercially available and reference is made here to the CombiTec System introduced by Argonaut Technologies in which use is made of a so-called "Reactor Cassette".

One of the problems still remaining in this rapidly-growing area of technology is how to carry out operations at elevated temperature and/or elevated pressure. Another problem that still has not been solved is how to deal satisfactorily with reactive components, possibly also at elevated temperature and/or elevated pressure.

It has already been proposed in International Patent Application No. WO98/3682 to use multi-autoclaves for the combinatorial synthesis of zeolites and other materials. The system disclosed in this document uses a central block containing a number of separated chambers provided with top and bottom plates and closing mechanisms which can be integrated with the central block. It is not possible to exchange the reactor vessels in the disclosed arrangement.

In International Patent Application No. WO98/56506 individual racks of reactor vessels are installed in a modular construction accommodating parallel racks in an array. A single lid, hinged on the reactor, is used to form a seal between a fluid manifold and all of the reactors at once. The integrity of the seal is ensured by using a spring or other biasing element to force the reactor onto the manifold. This acts as an intrinsically safe pressure regulator for operation upto 110-138 kPa (16-20 psi), but the sealing mechanism cannot be used reliably at higher pressures.

International Patent Application No. WO99/24160 discloses an arrangement in which parallel racks of reactor vessels containing a reaction mixture, which can be dosed using a robot equipped with a syringe, are heated with a heated medium and simultaneously mixed in a shaker. The key to this concept is a novel flexible connection between the reactor tube and an overhead gas manifold through which a syringe can be deployed to add or remove fluids. Again, the sealing arrangement disclosed in this document does not lend itself to high-pressure applications.

In European Patent Application No. 0 916 397, an apparatus and method are disclosed for use in multiple simultaneous synthesis of general compounds. The system could, in principle, be used for high-pressure applications, but requires that each reactor vessel be opened and closed individually via a screw-cap fitting. Independent sealing of the reactor vessels in this way means that the system is not suitable for high throughput operations.

This European patent application also discloses an embodiment in which a plurality of reaction vessels is closed simultaneously.

International Patent Application No. WO98/17391 describes a system for the parallel handling of a plurality of vessels that are located on either side of a plate and are connected with each other via openings in the plate. The vessels are held in place with O-rings which are located in the plate openings and the vessels must be sealed individually. There is no common mechanism for sealing the vessels collectively. In addition, the seal design is not applicable to high-pressure operations.

US6,132,686 discloses an assembly of reaction vessels. All reactions vessels are individually closed by means of screw caps. This screw thread connection is subjected to the mechanical loads that are caused by the pressure and the variations thereof inside the reactor. In use, the lower rim of the cap carries the weight of the reaction vessels.

From the foregoing, it can be seen that the main disadvantages of currently available systems are as follows:
- Limited flexibility - usually, the reaction vessels must be sealed individually. In addition, a number of the known systems only allow the use of specially designed components, which ties the user to a particular system manufacturer.
- The use of a screw-cap closure or of a spring/biasing component to achieve the necessary force for effective sealing. These mechanisms must be present for each individual reaction vessel.
- Suitability only for low-pressure applications.

The use of cold reaction vessel lids may result in condensation of reagents during reaction. This is especially problematic for systems intended to work with only small volumes of fluid.

It is therefore an object of the present invention to provide a reactor vessel array that has the capability for flexible exchange of reactor vessels, including different shapes or dimensions and possibly reaction vessels made of different materials. It is another object of the present invention to provide a reactor vessel array that allows easy exchange of reactor vessels in order that they may be used in another, consecutive, process or unit operation. It is yet another object of the present invention to provide a reactor vessel array which allows flexible exchange of inlet and outlet ports. It is still another object of the present invention to provide a reactor vessel array which has the capability to permit overhead stirring. It is a still further object of the present invention to provide a reactor vessel array which has separate inlets and outlets for gases, liquids and solids. Yet another object of the present invention is to provide a reactor vessel array which is adapted for high-pressure sealing. It is yet another object of the present invention to provide a reactor vessel array which has the capability of sealing a plurality of reactor vessels in a single operation. A still further object of the present invention is to provide a reactor vessel array which is compatible with commercially available glassware, polymer containers, heaters and stirrers.

One or more of the above objects are obtained by the apparatus according to claim 1.

The temperature-controlled block which is movable relative to the underside of the support means e.g. enables one or more of the reaction vessels to be accommodated within a uniform heating and/or cooling environment.

The advantage of the arrangement according to the present invention is that the reaction vessels are held by the supporting plate in such a way that they are prevented from falling through the supporting plate and therefore there is no need for an additional vessel holder underneath the supporting plate.

A further advantage of the apparatus according to the present invention is that a plurality of reactors may be simultaneously closed with little effort, providing a leak-tight seal, even in conditions of high temperature and pressure.

The reaction vessels protrude through the supporting plate and are receivable in a temperature-controlled block which is moveable relative to the underside of the supporting plate to enable the reaction vessels to be placed within the environment of the block for uniform heating and/or cooling, as required.

The closure member contains passages, which may e.g. comprise inlets and outlets for reaction fluids (liquids and/or gases) or effluents, or apertures for connecting sensors, electrodes, mixing devices or the like to the reaction vessels in a leak-tight manner. Preferably, the passages are sealable. Further, it is preferred that at least inlets and outlets for liquids and/or gases are present.

Most conveniently, the reaction vessels are essentially tubular and have a transverse flange at or near the rim of the tube. However, it is also possible to use reaction vessels having shapes other than tubular. For example, the reaction vessels may be flasks of conical or spherical shape having their necks fitting the reaction vessel holding formations in the supporting plate. This increases the flexibility of the reaction vessel array according to the present invention. A flange-retaining collar may be required to assist in fastening non-tubular reaction vessels to the supporting plate.

If desired, the reaction vessel may be provided with inert linings which can either form an integral part of the insides of the reaction vessels or can be in the form of removable linings, for instance, linings made from chemically inert materials such as glass or plastics. If the reaction vessel wall is made of steel, for instance, then an inert lining will be useful to prevent contact of the wall with aggressive reaction constituents. For example, when corrosive materials like hydrochloric acid have to be placed in steel vessels because of pressure requirements, an inert lining may be used to protect the reaction vessel walls.

Preferably the seals are gaskets composed of compressible materials. A compressible material can guarantee a leak-tight seal, even when the surface of the flanges is not completely smooth.

Preferably, the seals associated with the reaction vessel flanges are O-ring seals.

Alternatively, the seals may be formed of a material (such as a soft ductile metal or the like) capable of forming a knife-edge which, when subjected to the closing force exerted by the closure plate, bites into the material of the flange, or of the closure plate, to establish an effective seal. In a variant of this arrangement, the flange could be formed with a knife edge which bites into the material of the seal, preferably a metal gasket formed of brass, gold, tantalum, iridium or the like, when subjected to the closing force exerted by the closure plate. Again, this will guarantee a leak-tight seal, even when the surface of the flanges is not completely smooth.

The supporting plate and the closure plate can be formed of any material compatible with the physical and/or chemical operations to be performed and may therefore comprise wood, glass, plastics, steel or the like. Preferably, the supporting plate and the closure plate are composed of steel. However, those skilled in the art will be capable of choosing a suitable material depending on the nature of the operation(s) to be performed and it is not the purpose of this specification to teach the criteria used in such a selection process.

Because the supporting plate can be relatively short in comparison to the total length of the reaction vessels which it holds, the supporting plate is relatively light in weight compared to equivalent features in known apparatus.

Advantageously, the closure plate may incorporate septum means in alignment with each of the reaction vessel openings, to enable liquid sampling whilst maintaining seal integrity. Also, it is possible to incorporate a bursting disc in alignment with each of the vessel openings, for added safety.

The arrangement of the supporting plate and a closure plate enables good thermal contact between the temperature-controlled reaction block and the closure plate. This means that the closure plate, and hence the lid of each reaction vessel, may therefore be operated at approximately the same temperature as the temperature-controlled block. This reduces problems associated with condensation of high-boiling components on the underside of the closure plate. In the case of reactants condensing, this condensation may lead to side reactions in the top of the reactor under non-controlled conditions. Condensation of solvent will lead to loss of solvent in the reaction mixture leading to a higher concentration of reactants. Thus, on the one hand one needs to cool the sealing means to such a temperature to guarantee proper sealing. On the other hand one would like to heat the closure member (and the fluid inlets and outlets) to at least such a temperature that condensation of liquids is avoided. Both constraints are met by a particularly preferred embodiment of the apparatus of the invention wherein the closure member comprises additional temperature controlling means, optionally associated to the closure member. This temperature controlling means may control the temperature by controlled heating and/or controlled cooling. The temperature controlling means may comprise a massive heating block thermally connected to the top plate. Additionally or instead, the closure member may comprise active or passive cooling means. It may also comprise a box attached to the top of the closure plate, where the air inside the box is kept at a certain temperature. With the box (i.e. stove) the additional advantage is the fact that all linings and connections inside that box are kept at the same temperature. With such measures it is possible to independently control the temperature to such a level that on the one hand condensation is avoided, while at the other hand avoiding too high temperatures that may lead to malfunctioning of the sealing means. The person skilled in the art will understand that also other temperature controlling means may be provided.

The flange formations on the reaction vessels allow for flexible exchange of reaction vessels for others with different shapes or dimensions or that are composed from different materials. This flexible exchange capability also means that it is easy to exchange reaction vessels in order to use the same vessels in another, consecutive, process or unit operation. The capability also exists for flexible exchange of connections for inlet and outlet ports. The design of the closure plate may be such that there are separate inlets and outlets for gases, liquids and solids.

The simplicity of the design ensures that the components of the system are compatible with commercially-available glassware or reaction vessels of alternative materials such as plastics, and ensures compatibility with commercially available heaters and stirrers. Since the reaction vessels have a common closure plate rather than reactive lids which must be individually rotated or moved, the closure plate may have a variety of components mounted on it for monitoring or adjusting the progress of the reactions taking place in the reaction vessels. For example, these components could include temperature and pressure sensors, pH electrodes and overhead stirrers.

Also the introduction of inlets and outlets for each vessel are facilitated using the apparatus of the present invention. Once proper and leak tight-inlet and outlet connections to the top plate have been made, one single action will connect these inlets and outlets to the corresponding reactor vessel.

In this way also sensors can be introduced into the reactor in a leak-tight manner. To guarantee a proper sealing of the assembly a proper leak-tight connection of each sensor to the top plate has to be made.

Further, also electrodes for performing electro-chemical conversions may be introduced in a leak-tight manner.

The main advantage of the invention is that there is easy sealing of a multiplicity of reaction vessels by a single action. This single action sealing for all reaction vessels enables the use of convenient sealing mechanisms, which may be mechanically, electrically or pneumatically actuated. The robust nature of the construction means that reactions may be carried out at very high pressures. Operation is inherently safe due to the robust mounting of the flanged reaction vessels in the supporting plate.

In a further aspect, the present invention relates to a process for performing physical and/or chemical operations in which use is made of an apparatus according to the invention.

Preferably, during the process a mixing operation is carried out using an orbital shaker. Instead a mixing operation may be carried out using magnetic mixing means.

Advantageously use is made of rod-shaped stirrers present in the reaction vessels during mixing.

Further it is preferred that a mixing operation is performed using ultrasound to initiate and maintain mixing.

The invention will now be particularly described by way of example only with reference to the drawings, in which:
Fig. 1 is a perspective view of (part of) a multiple vessel reaction apparatus;
Fig. 2 is a series of cross-sectional views illustrating various sealing configurations for flanged reaction vessels; and
Fig. 3 a schematic cross-sectional view of (part of) a multiple vessel reaction apparatus, illustrating the temperature control of the closure member.

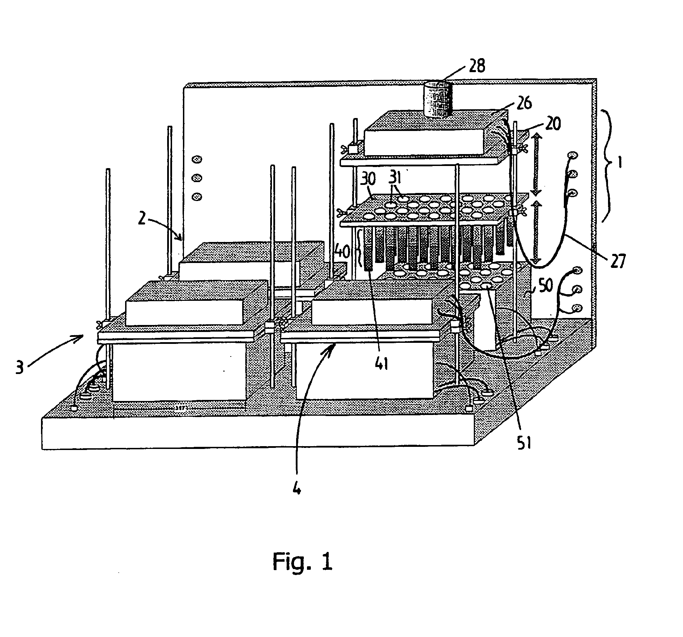

In Fig. 1, a reactor vessel array 1 is shown in a partly exploded perspective view. Three other reactor vessel beds 2, 3 and 4 are shown in the closed configuration. Multiple beds may be desirable, for example, where parallel reactions are being carried out under different conditions of temperature and/or pressure.

The reactor vessel array 1 comprises a closure plate 20 and a supporting plate 30 having a plurality of through-holes 31 each which holds a reaction vessel 40. Each reaction vessel 40 has an elongate portion 41 depending from the underside of the supporting plate 30. The elongate portion 41 of each reaction vessel 40 is receivable in a hole 51 formed in a temperature-controlled block 50. In the example illustrated in Fig. 1, there are 24 reaction vessels arranged in a 6 x 4 array. The through-holes 31 in the supporting plate 30 are arranged to be in axial alignment with the holes 51 in the temperature-controlled block 50. It will be understood by a person skilled in the art that different sizes and dimensions of array could be used as an alternative without detriment to the performance of the invention.

The closure plate 20 has associated therewith a gas manifold 26 which is connected to a main fluid manifold (not shown) by connecting lines 27. The gas manifold 26 incorporates a number of pneumatically-actuated valves for controlling flow or gases to and from the reaction vessels 40. The actuator for the valves in the gas manifold 26 is denoted by reference numeral 28.

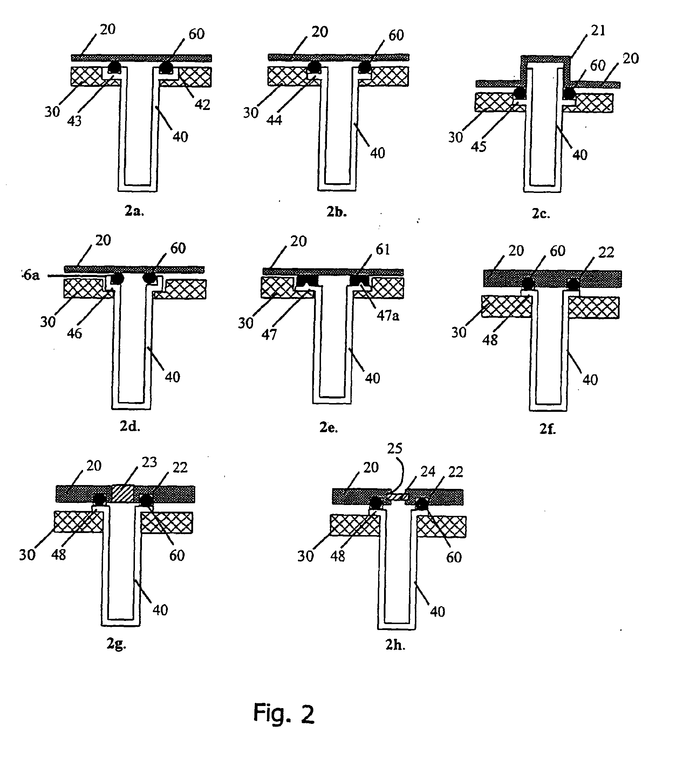

Turning now to Fig. 2, views 2a to 2h each show a cross-sectional view through a part of a reaction vessel array and depict different configurations of sealing between an individual reaction vessel 40 and the closure plate 20. For convenience, the reaction vessels 40 shown in these views are essentially tubular, although it will be understood by persons skilled in the art that other shapes of reaction vessel could be used provided that the neck formation in the region of the flange is compatible with the arrangements shown in these drawings.

Dealing firstly with view 2a, this represents one of the simplest arrangements for sealing the rim of a reaction vessel 40 to the underside of the closure plate 20. At the upper rim of the reaction vessel 40, there is a transverse flange 42 having a recess 43 described in its upper surface for receipt of an O-ring seal 60. When bedded into the recess 43, the O-ring seal 60 stands proud of the rim of the reaction vessel 40 so that, when the closure plate 20 is moved into sealing engagement with the reaction vessel 40, fluid tightness is effected by compression of the O-ring seal 60 between the underside of the closure plate 20 and the upper surface of the flange 42.

View 2b shows a variant that uses a reduced external flange 44. Rather than having a full transverse flange with a recess 43 like the variant depicted in view 2a, the reduced external flange 44 has no recess. Instead, the O-ring seal 60 is accommodated in the angle between the upstanding rim of the reaction vessel 40 and the transverse shelf formed by the flange 44. As previously, the O-ring seal 60 stands proud of the rim of the reaction vessel 40 so that, when the closure plate 20 is moved into sealing engagement with the reaction vessel 40, fluid-tightness is effected by compression of the O-ring seal 60 between the underside of the closure plate 20 and the upper surface of the flange 44.

View 2c shows another variant having an external flange 45. However, in this arrangement, the external flange 45 is positioned a short distance away from the rim of the reaction vessel 40 and the rim of the reaction vessel 40 protrudes into a blind hole 21 formed in the closure plate 20. In cross-section, one might say that the closure plate 20 with its blind hole 21 forms a top hat section. The O-ring seal 60 no longer stands proud of the rim of the reaction vessel 49, but engages the underside of the closure plate 20 at the intersection of the rim and the base of the crown of the top hat section.

View 2d shows an arrangement having a reduced internal flange 46. Here, the rim of the reaction vessel 40 merges directly into the transverse flange 46 which has an upstanding lip 46a at its radially outermost periphery. The O-ring seal 60 is accommodated radially inwardly of the upstanding lip 46a and overlies the rim of the reaction vessel 40. The O-ring seal 60 stands proud of the upstanding lip 46a so that, when the closure plate 20 is moved into sealing engagement with the reaction vessel 40, fluid-tightness is effected by compression of the O-ring seal 60 between the underside of the closure plate 20 and the upper surface of the flange 46.

In view 2e, a variant is depicted in which the transverse flange 47 provided at the rim of the reaction vessel 40 is formed with a knife-edge annular protuberance 47a on its upper surface. A metal gasket 61 is placed over the flange 47 so that it overlies the knife edge protuberance 47a. The metal gasket 61 is of a thickness such that it stands proud of the upper surface of the supporting plate 30 so that, when the closure plate 20 is moved into sealing engagement with the reaction vessel 40, fluid-tightness is effected by compression of the gasket 61 between the underside of the closure plate 20 and the upper surface of the flange 47. Also, the closing action causes the knife-edge protuberance 47a to bite intro the material of the gasket 61, ensuring seal integrity.

The embodiments described above with reference to views 2a to 2e all use a supporting plate 30 having a stepped through-bore which forms a shelf for the respective flange formations of the various reaction vessels that have been described. In view 2f, a plain supporting plate 30 is used and the reaction vessel 40 has a plain transverse flange 48. In this variant, the sealing plate 20 is provided on its underside with a cavity 22 which accommodates the O-ring seal 60. The O-ring seal 60 protrudes slightly from the cavity 22 so that, when the closure plate 20 is moved into sealing engagement with the reaction vessel 40, fluid-tightness is effected by compression of the Q-ring seal 60 between the underside of the closure plate 20 and the upper surface of the flange 48.

View 2g is a variant of the embodiment described above in relation to view 2f, but incorporating a septum 23 in a through-hole in the sealing plate 20 which aligns with the opening at the top of the reaction vessel 40. The septum 23 enables sampling and/or dosing of the reaction vessel contents without compromising seal integrity. It will be understood by persons skilled in the art that a septum of equivalent construction could be incorporated in the embodiments discussed above with reference to views 2a to 2e.

View 2h shows another variant of the arrangement depicted in view 2f, this time incorporating a bursting disc 24 in a recess 25 formed in the walls of a through-hole provided in the sealing plate 20. Again, the through-hole in the sealing plate 20 is aligned with the opening at the top of the reaction vessel 40. The bursting disc 24 is an added safety precaution that may be required when operating with reactants under high pressure or where high pressures are likely to be created under the prevailing reaction conditions in the reaction vessel 40. Again, it will be understood by persons skilled in the art that the bursting disc feature could be incorporated in any one of the arrangements described above with reference to views 2a to 2e.

In yet another variant (not shown), the reaction vessels 40 may be sealed to the supporting plate 30 rather than to the closure plate 20. In this variant, the seals may be located on the underside of the reaction vessel flanges. However, this leaves a leak path from one reaction vessel to another which requires auxiliary seals to be provided between the supporting plate and the closure plate, surrounding the rim of each reaction vessel. Although functionally equivalent to the arrangements described above, this is complex and the simpler alternative of sealing the reaction vessels to the closure plate is preferred.

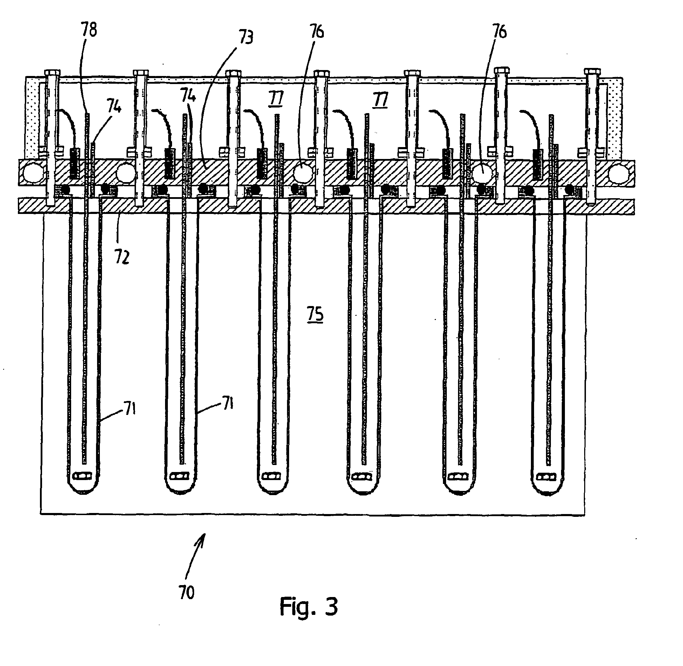

In Fig. 3 a schematic cross-sectional view of part of an apparatus 70 according to the present invention is shown, which apparatus 70 is suitable for high temperature and high pressure applications. The apparatus 70 comprises a plurality of reaction vessels 71, support means 72 for supporting the reaction vessels 71 and a closure member 73 which is adaptable for movements relative to the support means 72 such that it can be urged towards a rim of each of the reaction vessels 71 to effect a fluid tight union between the reaction vessels 71 and the closure member 73. To this end the reaction vessels 71 have a flange at or adjacent to the rim and a seal associated with the flange, as described in Fig. 2.

The apparatus 70 further comprises sealable inlets and outlets 74 for liquids and/or gases, and a sensor inlet (or inlet for temperature probe) 78.

Also the apparatus 70 comprises a temperature controlled block 75 movable relative to the underside of the support means 72 to enable the reaction vessels 71 to be accommodated within a uniform heating and/or cooling environment.

The closure member 73 comprises means for controlling the temperature thereof. For instance, the closure member 73 comprises cooling channels 76 for optional cooling of the closure member 73. Also the closure member 73 may comprise a overhead chamber 77 for isolating and heating the closure member 73 and in- and outlets 74. The person skilled in the art will understand that controlling the temperature of the closure member 73 may be performed in a different manner, as long as the temperature of the closure member 73 is controlled such that on the one hand condensation of liquid on the underside of the closure member 73 is avoided, while at the other hand too high temperatures are prevented, which may lead to malfunctioning of the sealing means.

Although the invention has been particularly described above with reference to specific embodiments, it will be understood by persons skilled in the art that further modifications and variations are possible without departing from the scope of the claims which follow.

## Claims

1. Apparatus for high temperature and high pressure applications, comprising:
- a plurality of reaction vessels (40,17),
- support means (30,72) for supporting said reaction vessels, and
- a closure member (20,73), which closure member is a closure plate and which closure member contains passages and is adapted for movement relative to said supporting means,
in which apparatus each reaction vessel comprises a rim, which is adapted to cooperate in a sealing manner with the closure member when the closure member is urged towards the reaction vessels to effect a fluid tight union between the reaction vessels and the closure member,
wherein the apparatus further comprises a temperature-controlled block that is moveable relative to the underside of the support means.
**characterised in that**
each of the reaction vessels further comprises a flange (42,44,45,46,47,48) at or adjacent to the rim,
and **in that** the apparatus further comprises seals, each associated with a flange,
and **in that** the supporting means is a supporting plate having a through-bore which forms a shelf for the flange, the through-bore being either a stepped through-bore or a through-bore through a plain supporting plate.

2. Apparatus according to claim 1, in which at least some of the reaction vessels are provided with an inert lining.

3. Apparatus according to claim 1 or 2 in which the seals are gaskets composed of compressible materials.

4. Apparatus according to claim 3 in which the seals are O-ring seals.

5. Apparatus according to claim 3 in which the seals are metal gaskets formed of brass, gold, tantalum or indium.

6. Apparatus according to claims 1 or 2 in which the seals are formed of a material capable of forming a knife-edge which, when subjected to the closing force exerted by the closure member, bites into the material of the flange and/or of the closure member.

7. Apparatus according to claims 1 or 2 in which the flanges are formed with a knife-edge which bites into the material of the seals.

8. Apparatus according to any preceding claim wherein the closure member incorporates inlets for sensors.

9. Apparatus according to any preceding claim wherein the closure member incorporates gate mains for overhead stirring.

10. Apparatus according to any preceding claim, wherein the closure member incorporates septum means in alignment with each of the reaction vessel openings.

11. Apparatus according to any preceding claim, wherein the closure member incorporates bursting disc means in alignment with each of the reaction vessel openings.

12. Apparatus according to any preceding claim, wherein the closure member comprises means for controlling the temperature of the closure member.

13. Apparatus according to any preceding claim, in which the closure member can maintain good thermal contact with the temperature-controlled block and can be heated thereby to a temperature above which reagents condense on the underside of the closure member.

14. Apparatus according to any preceding claim, in which the closure member is moved relative to the support means by manual, mechanical, electrical via a motor, hydraulic or pneumatic means.

15. A process for performing physical and/or chemical operations in which use is made of an apparatus according to any one of the preceding claims.

16. A process according to claim 15 in which a mixing operation is carried out using an orbital shaker.

17. A process according to claim 16 in which use is made of rod-shaped stirrers present in the reaction vessels during mixing.

18. A process according to claim 15 in which a mixing operation is performed using ultrasound to initiate and maintain mixing.

## Patentansprüche

1. Vorrichtung für Hochtemperatur- und Hochdruckanwendungen, enthaltend:
- mehrere Reaktionsgefäße (40,17),
- eine Abstützeinrichtung (30, 72) zum Abstützen der Reaktionsgefäße, und
- ein Verschlusselement (20, 73), das eine Verschlussplatte ist und Durchgänge aufweist und für eine Bewegung gegenüber der Unterseite der Abstützeinrichtung eingerichtet ist,
in welcher Vorrichtung jedes Reaktionsgefäß einen Rand hat, der dazu eingerichtet ist, in abdichtender Weise mit dem Verschlusselement zusammen zu wirken, wenn das Verschlusselement gegen die Reaktionsgefäße gedrückt ist, um eine fluiddichte Vereinigung zwischen den Reaktionsgefäßen und dem Verschlusselement herzustellen, wobei die Vorrichtung weiterhin einen temperaturgesteuerten Block aufweist, der gegenüber der Unterseite der Abstützeinrichtung beweglich ist,
**dadurch gekennzeichnet, dass**
jedes der Reaktionsgefäße weiterhin einen Flansch (42, 44, 45, 46, 47, 48) an oder nahe dem Rand aufweist,
und dass die Vorrichtung weiterhin Dichtungen hat, die jeweils einem Flansch zugeordnet sind,
und dass die Abstützeinrichtung eine Tragplatte ist, die eine Durchgangsbohrung aufweist, die eine Auflage für den Flansch bildet und die entweder eine abgestufte Durchgangsbohrung oder eine Durchgangsbohrung durch die volle Tragplatte ist.

2. Vorrichtung nach Anspruch 1, bei der wenigstens einige der Reaktionsgefäße mit einer inerten Auskleidung versehen sind.

3. Vorrichtung nach Anspruch 1 oder 2, bei der die Dichtungen aus kompressiblem Material bestehende Dichtringe sind.

4. Vorrichtung nach Anspruch 3, bei der die Dichtungen O-Ring-Dichtungen sind.

5. Vorrichtung nach Anspruch 3, bei der die Dichtungen Metalldichtringe sind, die aus Messing, Gold, Tantal oder Indium bestehen.

6. Vorrichtung nach Anspruch 1 oder 2, bei der die Dichtungen aus einem Material gebildet sind, das in der Lage ist, einen Messerrand zu bilden, der, wenn er der auf das Verschlusselement einwirkenden Schließkraft unterworfen wird, sich in das Material des Flansches und/oder des Verschlusselements einschneidet.

7. Vorrichtung nach Anspruch 1 oder 2, bei der die Flansche mit einer Messerkante ausgebildet sind, die sich in das Material der Dichtungen einschneidet.

8. Vorrichtung nach einem der vorhergehenden Ansprüche, bei der das Verschlusselement Einlässe für Sensoren beinhaltet.

9. Vorrichtung nach einem der vorhergehenden Ansprüche, bei der das Verschlusselement Durchlasseinrichtungen für das Umrühren von oben aufweist.

10. Vorrichtung nach einem der vorhergehenden Ansprüche, bei der das Verschlusselement Scheidewände in Ausrichtung mit jeder der Reaktionsgefäßöffnungen beinhaltet.

11. Vorrichtung nach einem der vorhergehenden Ansprüche, bei der das Verschlusselement Berstscheibenanordnungen in Ausrichtung mit jeder der Reaktionsgefäßöffnungen beinhaltet.

12. Vorrichtung nach einem der vorhergehenden Ansprüche, bei der das Verschlusselement eine Einrichtung zum Beeinflussen der Temperatur des Verschlusselements aufweist.

13. Vorrichtung nach einem der vorhergehenden Ansprüche, bei der das Verschlusselement einen guten Wärmekontakt mit dem temperaturgesteuerten Block aufrecht erhalten und **dadurch** auf eine Temperatur erhitzt werden kann, oberhalb der Reagenzien an der Unterseite des Verschlusselements kondensieren.

14. Vorrichtung nach einem der vorhergehenden Ansprüche, bei der das Verschlusselement gegenüber der Abstützeinrichtung durch manuelle, mechanische, elektromotorische, hydraulische oder pneumatische Einrichtungen bewegt wird.

15. Verfahren zum Ausführen physikalischer und/oder chemischer Vorgänge, bei dem von einer Vorrichtung nach einem der vorhergehenden Ansprüche Gebrauch gemacht wird.

16. Verfahren nach Anspruch 15, bei dem ein Mischvorgang unter Verwendung eines kreisenden Rüttlers ausgeführt wird.

17. Verfahren nach Anspruch 16, bei dem von stabförmigen Rührern Gebrauch gemacht wird, die in den Reaktionsgefäßen während des Mischens vorhanden sind.

18. Verfahren nach Anspruch 15, bei dem ein Mischvorgang unter Verwendung von Ultraschall ausgeführt wird, um das Mischen einzuleiten und aufrecht zu erhalten.

## Revendications

1. Appareil pour des applications à haute température et haute pression, comprenant :
- une pluralité de récipients de réaction (40, 17),
- des moyens de support (30, 72) pour supporter lesdits récipients de réaction, et
- un élément de fermeture (20, 73), lequel élément de fermeture est une plaque de fermeture et lequel élément de fermeture contient des passages et est adapté pour le mouvement par rapport auxdits moyens de support,
dans lequel appareil, chaque récipient de réaction comprend un bord, qui est adapté pour coopérer d'une manière étanche avec l'élément de fermeture lorsque l'élément de fermeture est poussé vers les récipients de réaction pour effectuer une réunion étanche au fluide entre les récipients de réaction et l'élément de fermeture, dans lequel l'appareil comprend en outre un bloc contrôlé par température qui est mobile par rapport à la face inférieure des moyens de support,
**caractérisé en ce que :**
chacun des récipients de réaction comprend en outre un rebord (42, 44, 45, 46, 47, 48) au niveau de ou de manière adjacente au bord,
et **en ce que** l'appareil comprend en outre des joints d'étanchéité, chacun associé à un rebord,
et **en ce que** les moyens de support sont une plaque de support ayant un alésage débouchant qui forme une étagère pour le rebord, l'alésage débouchant étant un alésage débouchant étagé ou bien un alésage débouchant à travers une simple plaque de support.

2. Appareil selon la revendication 1, dans lequel au moins certains des récipients de réaction sont dotés d'un revêtement inerte.

3. Appareil selon la revendication 1 ou 2, dans lequel les joints d'étanchéité sont des garnitures composées de matériaux compressibles.

4. Appareil selon la revendication 3, dans lequel les joints d'étanchéité sont des joints toriques.

5. Appareil selon la revendication 3, dans lequel les joints d'étanchéité sont des garnitures métalliques formées à partir de laiton, d'or, de tantale ou d'indium.

6. Appareil selon la revendication 1 ou 2, dans lequel les joints d'étanchéité sont formés à partir d'un matériau pouvant former un bord tranchant qui, lorsqu'il est soumis à la force de fermeture exercée par l'élément de fermeture, mord dans le matériau du rebord et/ou de l'élément de fermeture.

7. Appareil selon la revendication 1 ou 2, dans lequel les rebords sont formés avec un bord tranchant qui mord dans le matériau des joints d'étanchéité.

8. Appareil selon l'une quelconque des revendications précédentes, dans lequel l'élément de fermeture comprend des entrées pour des capteurs.

9. Appareil selon l'une quelconque des revendications précédentes, dans lequel l'élément de fermeture comprend des conducteurs principaux à porte pour l'agitation par-dessus.

10. Appareil selon l'une quelconque des revendications précédentes, dans lequel l'élément de fermeture comprend des moyens de septum alignés avec chacune des ouvertures de récipient de réaction.

11. Appareil selon l'une quelconque des revendications précédentes, dans lequel l'élément de fermeture comprend des moyens formant disque de rupture alignés avec chacune des ouvertures de récipient de réaction.

12. Appareil selon l'une quelconque des revendications précédentes, dans lequel l'élément de fermeture comprend des moyens pour contrôler la température de l'élément de fermeture.

13. Appareil selon l'une quelconque des revendications précédentes, dans lequel l'élément de fermeture peut maintenir un bon contact thermique avec le bloc contrôlé en température et peut être chauffé ainsi à une température au-dessus de laquelle les réactifs se condensent sur la face inférieure de l'élément de fermeture.

14. Appareil selon l'une quelconque des revendications précédentes, dans lequel l'élément de fermeture est déplacé par rapport aux moyens de support par des moyens manuels, mécaniques, électriques via un moteur, hydrauliques ou pneumatiques.

15. Procédé pour réaliser des opérations physiques et/ou chimiques dans lequel on utilise un appareil selon l'une quelconque des revendications précédentes.

16. Procédé selon la revendication 15, dans lequel une opération de mélange est réalisée en utilisant un agitateur orbital.

17. Procédé selon la revendication 16, dans lequel on utilise des agitateurs en forme de tige présents dans les récipients de réaction pendant le mélange.

18. Procédé selon la revendication 15, dans lequel une opération de mélange est réalisée en utilisant des ultrasons pour initier et maintenir le mélange.
